# EUROPEAN PATENT APPLICATION

(11) **EP 2 462 802 A1**
(43) Date of publication of application: **13.06.2012**
(21) Application number: 11191929.6
(22) Date of filing: 05.12.2011
(51) Int. Cl.: A01K 25/00

(54) **Muzzle for dogs**

(30) Priority: 10.12.2010 IT MO20100350
(71) Applicant: Un Ciuffo di Pelo S.r.l., 41019 Soliera (MO) (IT)
(72) Inventor: Sogari, Paola, 41019 Soliera (MO) (IT); Malavasi, Mirco, 41019 Soliera (MO) (IT)
(74) Representative: Brunacci, Marco

(57) **Abstract**

The muzzle (1) for dogs comprises at least a locking element (2), defining a closed profile and fittable on a dog's snout to prevent its opening, at least a retention element (3), associated with the locking element (2) and applicable around the dog's neck to prevent its fortuitous removal, wherein the locking element (2) contains pheromones.

## Description

The present invention relates to a muzzle for dogs.

The muzzles for dogs are generally composed of a locking element, which defines a closed profile and is fittable on the dog's snout to prevent its opening, and of a retention element, connected to the locking element and applicable around the dog's neck to prevent the fortuitous removal of the locking element itself.

Since not being able to open the mouth, through which a dog feeds itself and communicates with the outside world, is a big limit which greatly influences its behavior, the shape of muzzles for dogs has evolved over time in order to reduce the inconvenience to the animal.

In particular, while in the past the conformation of the locking element was such as to cover the dog's snout almost entirely, the muzzles now on the market have the locking element made of a fabric closed portion which surrounds only the upper and lower part of the snout. The overall dimensions of the muzzles now on the market have been considerably reduced compared with those used so far. Nevertheless, the application of the muzzle is still very annoying for a dog, that has great trouble to adapt to the presence of the same and as a consequence tends to modify its behavior.

As the recent standards require, for logical safety reasons, that the owner of a dog carries the muzzle with him/her when being in public places, it follows that the use of such accessory is more and more frequent nowadays.

The main aim of the present invention is to provide a muzzle for dogs which allows to overcome the drawbacks of the known art, that is the use of which is less annoying for the dog compared to the muzzles of known type.

Within this aim, one object of the present invention is to provide a muzzle which can not only prevent any trouble to the dog, but give it a pleasant sensation, so as to get it accustomed very quickly to the use of the muzzle itself. Another object of the present invention is to provide a muzzle for dogs that allows overcoming the mentioned drawbacks of the state of the art in the ambit of a simple, rational, easy and effective to use as well as low cost solution.

The above mentioned objects are achieved by the present muzzle for dogs, comprising at least a locking element, defining a closed profile and fittable on a dog's snout to prevent its opening, at least a retention element, associated with said locking element and applicable around the dog's neck to prevent its fortuitous removal and characterized by the fact that said locking element contains pheromones.

Other characteristics and advantages of the present invention will become more evident from the description of a preferred, but not sole, embodiment of a muzzle for dogs, illustrated purely as an example but not limited to the annexed drawings in which:

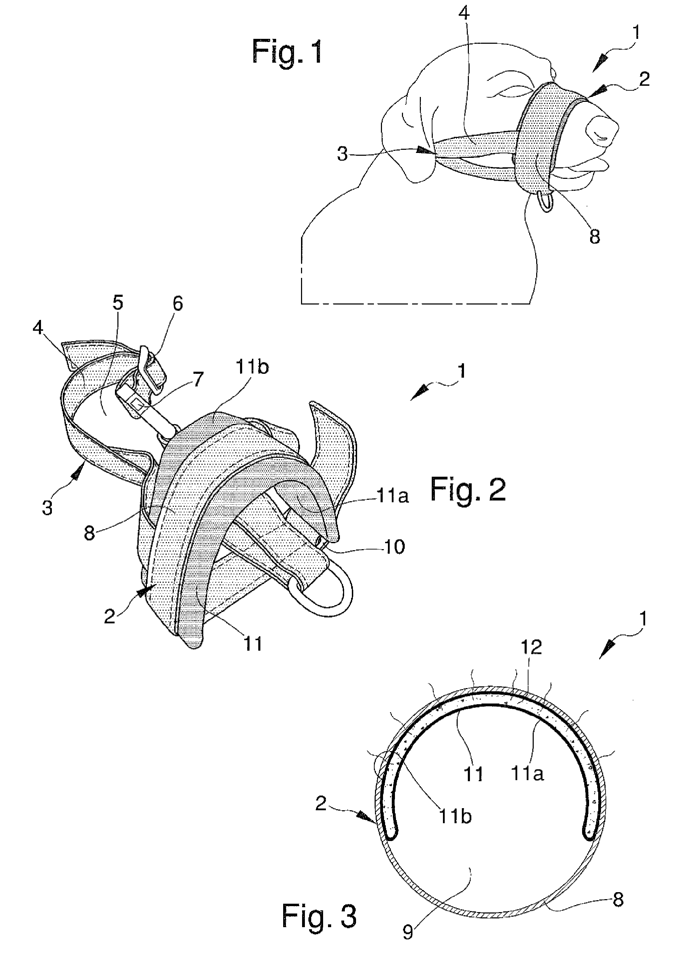

figure 1 is an axonometric view of a muzzle according to the invention applied to a dog;
figure 2 is an axonometric view of the muzzle of figure 1;
figure 3 is a section view of the muzzle of figure 2.

With particular reference to such illustrations, globally indicated by 1 is a muzzle for dogs.

The muzzle 1 comprises at least a locking element 2, which defines a closed profile and is fittable on a dog's snout to prevent its opening, and at least a retention element 3, associated with the locking element 2 and applicable around the dog's neck to prevent its fortuitous removal.

Suitably, the retention element 3 comprises a first strip 4 of flexible material, such as a fabric comprising nylon fibers or leather, suitable for defining a closed profile.

The first strip 4 therefore defines an housing seat 5 for the dog's neck.

Preferably, the retention element 3 comprises first adjustment means 6 for adjusting the length of the first strip 4, associated with the first strip itself and suitable for ensuring the adhesion to the dog's neck or to facilitate its use with dogs of different sizes.

Yet, the retention element 3 comprises opening/closing means 7 for opening/closing the first strip 4 which can be operated manually to split/join two extremities of the first strip itself.

The opening/closing means 7 are used to facilitate the application of the retention element 3 on the dog's neck.

Preferably, the locking element 2 comprises a second strip 8 of a flexible material, e.g. made using the same material of the first strip 4, suitable for surrounding the dog's snout. The second strip 8 defines, therefore, a housing seat 9 for the dog's snout.

The second strip 8 is integrally associated with the first strip 4, e.g. by means of stitching.

More particularly, the locking element 2 can comprise second adjusting means 10 for adjusting the length of the second strip 8, associated with the second strip itself and suitable for allowing the adjustment of its length, and therefore of the relative closed profile, to ensure its adhesion to the dog's snout or to facilitate its adaptability to dogs of different sizes.

According to the invention, the locking element 2 contains pheromones suitable for making the dog calm.

As it is known, in fact, the pheromones are chemical substances produced by the animals able to provoke specific reactions of the physiological and/or behavioral type in other fellows of the same species that come in contact with them.

The application of the pheromones to the locking element 2, which during use is arranged in proximity of the dog's nose, ensures its constant absorption by the same.

Advantageously, the locking element 2 comprises at least an internally hollow containment element 11, made of breathing material, and at least a padding element 12, not visible in detail in the figures, arranged inside the containment element 11 and containing the pheromones.

The padding element 12, which can be of the absorbing type or not, is therefore soaked in pheromones. The pheromones applied on the padding element 12 are therefore released by the same and diffused in the surrounding environment through the walls of the containment element 11 which, as it has been said, are of the breathing type and therefore porous.

Suitably, the containment element 11 is integrally associated with the second strip 8 and is made of a different material.

Preferably, the containment element 11 is arranged so as to contact the upper part of the dog's snout.

More in detail, the containment element 11 has a lower surface 11a, intended to contact the dog's snout and therefore turned to the inside of the closed profile defined by the locking element 2, and an upper surface 11b, turned to the outside and associated with the second strip 8.

Suitably, the lower surface 11a is substantially smooth to prevent any rubbing on the dog's snout thus causing injuries or scrapes.

In a first embodiment, the containment element 11 has a number of closing stitches suitable for preventing the access to the padding element 12.

In this embodiment, at least the containment element 11 is wound inside a wrapping suitable for preventing the pheromones from exiting. Such wrapping must then be removed before using the muzzle.

In a second embodiment, the containment element 11 has at least a re-closable opening suitable for allowing the introduction/removal of the padding element 12. In this embodiment, the containment element 11 also comprises removable closing means to close such opening, e.g. of the type of a zip fastener, Velcro or the like.

Preferably, the opening is positioned in correspondence to the upper surface 11b of the containment element 11 intended to be turned to the outside so as not to contact the dog's snout.

In this second embodiment, the padding element 12 can be contained inside a wrapping, e.g. made of plastic or the like, suitable for preventing the pheromones from exiting from the padding element itself.

Such wrapping is of the removable type to allow the exhalation of the pheromones and their consequent inhalation by the dog.

This second embodiment allows therefore to replace the padding element each time the pheromones contained in it are used up and also allows the use of the muzzle before the removal of the wrapping, without the pheromones being released.

It has in practice been seen how the described invention achieves the proposed objects and in particular the fact is underlined that the muzzle according to the invention causes, thanks to the exhalation of the pheromones, a calming effect on the dog.

The dog, therefore, by associating the pleasing sensation due to pheromones and the presence of the muzzle, adapts itself without any type of stress to the use of the muzzle itself.

It follows that the muzzle according to the invention allows to improve considerably the quality of life of the dog to which it is applied because, unlike the muzzles of known type, it does not cause any inconvenience to the dog itself.

Moreover, the presence of the re-closable opening suitable for allowing to replace the padding element or even the simple removal of the wrapping containing it, allows a very versatile use. The muzzle so conceived can be used several times, by replacing just the padding element once the pheromones are used up, or it can also be used as a simple muzzle, by removing the wrapping which prevents the emission of pheromones only in case of need.

## Claims

1. Muzzle (1) for dogs, comprising at least a locking element (2), defining a closed profile and fittable on a dog's snout to prevent its opening, at least a retention element (3), associated with said locking element (2) and applicable around the dog's neck to prevent its fortuitous removal and **characterized by** the fact that said locking element (2) contains pheromones.

2. Muzzle (1) according to claim 1, **characterized by** the fact that said locking element (2) comprises at least an internally hollow containment element (11), made of breathing material, and at least a padding element (12) arranged inside said containment element (11) and containing said pheromones.

3. Muzzle (1) according to claim 2, **characterized by** the fact that said containment element (11) is arranged so as to contact the upper part of the dog's snout.

4. Muzzle (1) according to claim 2 or 3, **characterized by** the fact that said containment element (11) has closing stitches.

5. Muzzle (1) according to claim 2 or 3, **characterized by** the fact that said containment element (11) has at least a re-closable opening suitable for allowing the introduction/removal of said padding element (12).

6. Muzzle (1) according to claim 5, **characterized by** the fact that said opening is positioned in correspondence to the upper surface (11b) of said containment element (11) intended to be turned to the outside of the closed profile defined by said locking element (2).

7. Muzzle (1) according to one or more of the preceding claims, **characterized by** the fact that said padding element (12) is contained inside a wrapping suitable for preventing said pheromones from exiting, said wrapping being removable.
